# EUROPÄISCHE PATENTSCHRIFT

(11) **EP 3 438 440 B1**
(45) Veröffentlichungstag und Bekanntmachung des Hinweises auf die Patenterteilung: **01.04.2020**
(21) Anmeldenummer: 18183082.9
(22) Anmeldetag: 12.07.2018
(51) Int. Cl.: F02M 31/125

(54) **VORRICHTUNG ZUM HEIZEN VON KRAFTSTOFF**
DEVICE FOR HEATING FUEL
DISPOSITIF DE CHAUFFAGE DE CARBURANT

(30) Priorität: 02.08.2017 DE 102017117539
(43) Veröffentlichungstag der Anmeldung: 06.02.2019
(73) Patentinhaber: MAN Truck & Bus SE, 80995 München (DE)
(72) Erfinder: Kalaß, Rainer, 91189 Rohr (DE)
(74) Vertreter: v. Bezold & Partner Patentanwälte - PartG mbB

(56) Entgegenhaltungen:
- EP-A2- 2 072 795
- DE-A1- 3 708 056
- DE-U1- 29 911 711

## Beschreibung

Die Erfindung betrifft eine Vorrichtung zum Heizen von Kraftstoff, insbesondere Dieselkraftstoff.

Vorrichtungen zum Heizen von Kraftstoff können als elektrische Heizeinrichtungen ausgebildet sein, bei denen beispielsweise ein PTC-Heizelement zwischen zwei Wärmetauscherprofilen angeordnet ist. Das PTC-Heizelement und die Wärmetauscherprofile sind in einem rohrförmigen Gehäuse angeordnet, das im Betrieb vom Kraftstoff durchströmt wird, um den Kraftstoff zu erwärmen.

Beispielsweise ist eine derartige Vorrichtung aus der EP 2 072 795 A2 bekannt. Diese offenbart eine Heizeinrichtung für Kraftstoff mit zumindest einem PTC-Heizelement und einer mit diesem in thermischem Kontakt stehenden Wärmeübertragungseinrichtung, die zwei Wärmeübertragungselemente aufweist. Ein rohrförmiges Gehäuse aus Kunststoff umgibt die Wärmeübertragungseinrichtung und das wenigstens eine PTC-Heizelement. Während des Betriebes der Heizeinrichtung strömt zu erwärmender Dieselkraftstoff durch das Gehäuse und um die Wärmeübertragungseinrichtung.

Weitere Vorrichtungen zum Heizen von Kraftstoff sind beispielsweise aus der DE 201 15 220 U1, der DE 299 11 711 U1 und der DE 38 15 306 A1 bekannt.

Typischerweise sind stromaufwärts der Vorrichtung zum Heizen des Kraftstoff ein oder mehrere Filter vorgesehen, die den Kraftstoff filtern. Die Filter weisen eine bestimmte Maschenweite, zum Beispiel ungefähr 300 µm, zum Herausfiltern von in dem Kraftstoff geführten Festkörperteilchen auf. Die Festkörperteilchen können insbesondere Metallspäne umfassen. Die Metallspäne können beispielsweise Aluminiumspäne sein, die als sogenannter Urschmutz noch aus der Fertigung der Komponenten stammen oder während des Betriebs durch aneinander reibende Flächen entstehen. Beispielsweise können an einem Bajonettverschluss zum Verschließen eines Kraftstofftanks aus Aluminium beim Schließen und Öffnen des Verschlusses Aluminiumspäne entstehen.

Bei ungünstigen Formen der Metallspäne, insbesondere bei länglichen Metallspänen, kann es passieren, dass diese die Filter passieren. Es wurde herausgefunden, dass diese Metallspäne eine Ursache für elektrische Kurzschlüsse in elektrischen Kraftstoffheizeinrichtungen sein können.

Aus der DE 37 08 056 A1 ist ein Heizelement zum Erwärmen strömender Medien bekannt. Das Heizelement enthält als Wärmetauscher einen sich aus mehreren Einzelkörpern zusammensetzenden Metallkörper. Zwischen den Einzelkörpern sind PTC-Elemente, die zur Heizung dienen, angebracht. Diese PTC-Elemente sind mit einer Kunststoffschicht umkapselt, aus der auch Stege gebildet sind, die zur mechanischen Fixierung der Einzelkörper dienen. Beim Einbau des Heizelementes in ein Rohr wirkt eine ringförmige Umhüllung als thermische und elektrische Isolation, da die Einzelkörper auch als Stromzuführung zu den PTC-Elementen dienen.

Der Erfindung liegt somit die Aufgabe zu Grunde, eine Vorrichtung zu schaffen, mit der elektrische Kurzschlüsse in elektrischen Kraftstoffheizeinrichtungen aufgrund von Metallspänen in dem Kraftstoff wirksam verhindert werden können.

Die Aufgabe wird gelöst durch eine Vorrichtung zum Heizen von Kraftstoff, insbesondere Dieselkraftstoff, gemäß dem unabhängigen Anspruch. Vorteilhafte Weiterbildungen sind in den abhängigen Ansprüchen und der Beschreibung angegeben.

Die Vorrichtung weist ein rohrförmiges Gehäuse zum Führen eines Kraftstoffstroms auf. Die Vorrichtung weist ein erstes Wärmetauscherelement, das in dem Gehäuse angeordnet ist, und ein zweites Wärmetauscherelement, das in dem Gehäuse angeordnet ist, auf. Die Vorrichtung weist ein elektrisches Heizelement, insbesondere ein PTC-Heizelement, das in dem Gehäuse zwischen dem ersten Wärmetauscherelement und dem zweiten Wärmetauscherelement angeordnet ist, auf. Das erste Wärmetauscherelement, das elektrische Heizelement und das zweite Wärmetauscherelement sind elektrisch leitend und thermisch verbunden. Die Vorrichtung weist ein erstes Strömungsleitelement, das dazu ausgebildet ist, den Kraftstoffstrom stromaufwärts des ersten Wärmetauscherelements und des zweiten Wärmetauscherelements in einen ersten Teilstrom, der das erste Wärmetauscherelement umströmt, und einen zweiten Teilstrom, der das zweite Wärmetauscherelement umströmt, aufzuteilen.

Durch die Aufteilung in zwei Teilströme kann verhindert werden, dass sich zwischen den Wärmetauscherelementen, insbesondere den stromaufwärtsseitigen Stirnflächen der Wärmetauscherelemente, Metallspäne beim Umspülen der stromaufwärtsseitigen Stirnfläche des elektrischen Heizelements ablagern. Damit kann eine Brückenbildung aus Metallspänen zwischen den Wärmetauscherelementen verhindert werden, die unter Umgehung des elektrischen Heizelements zu einem elektrischen Kurzschluss zwischen den Wärmetauscherelementen führen kann.

Insbesondere ist das erste Strömungsleitelement somit dazu ausgebildet, den Kraftstoffstrom so in den ersten Teilstrom und den zweiten Teilstrom aufzuteilen, dass ein Anlegen oder Ablagern von in dem Kraftstoffstrom geführten, elektrisch leitfähigen Festkörperteilchen, insbesondere Metallspänen, an einer stromaufwärtsseitigen Stirnfläche des elektrischen Heizelements, des ersten Wärmetauscherelements und/oder des zweiten Wärmetauscherelements verhindert wird.

Vorzugsweise kann das erste Strömungsleitelement, insbesondere direkt, stromaufwärts des elektrischen Heizelements, des ersten Wärmetauscherelements und/oder des zweiten Wärmetauscherelements angeordnet sein.

Beispielsweise kann das erste Strömungsleitelement in dem Gehäuse, insbesondere einem Strömungskanal des Gehäuses, angeordnet sein, wobei, vorzugsweise, das elektrische Heizelement, das erste Wärmetauscherelement und/oder das zweite Wärmetauscherelement ebenfalls in dem Strömungskanal angeordnet sind.

Bevorzugt können das erste Wärmetauscherelement und/oder das zweite Wärmetauscherelement Finnen aufweisen. Damit kann eine Oberfläche zur Wärmeübertragung erheblich vergrößert werden.

Zum Beispiel können das elektrische Heizelement, das erste Wärmetauscherelement, das zweite Wärmetauscherelement und/oder das erste Strömungsleitelement in einer Strömungsrichtung des Kraftstoffstroms ausgerichtet sein.

In einem Ausführungsbeispiel erstreckt sich das erste Strömungsleitelement ausgehend von einer stromaufwärtsseitigen Stirnfläche des elektrischen Heizelements. Alternativ oder zusätzlich verdeckt das erste Strömungsleitelement eine stromaufwärtsseitige Stirnfläche des elektrischen Heizelements in einer Strömungsrichtung des Kraftstoffstroms. Bei einer derartigen Konstruktion des Strömungsleitelements kann eine Brückenbildung aus (länglichen) Metallspänen zwischen stromaufwärtsseitigen Stirnfläche der Wärmetauscherelemente wirksam verhindert werden.

In einem weiteren Ausführungsbeispiel erstreckt sich das erste Strömungsleitelement entgegen einer Strömungsrichtung des Kraftstoffstroms vorstehend über das erste Wärmetauscherelement und das zweite Wärmetauscherelement hinaus. Damit kann gewährleistet werden, dass die Aufspaltung in Teilströme stromaufwärts der Wärmetauscherelemente erfolgt.

Insbesondere kann sich das erste Strömungsleitelement über eine stromaufwärtsseitige Stirnfläche des ersten Wärmetauscherelements und eine stromaufwärtsseitige Stirnfläche des zweiten Wärmetauscherelements hinaus erstrecken.

In einer Weiterbildung steht das erste Strömungsleitelement mindestens 4 mm, vorzugsweise mindestens 5 mm, über das erste Wärmetauscherelement und das zweite Wärmetauscherelement entgegen der Strömungsrichtung des Kraftstoffstroms vor. Damit können auch längere Metallspänen mit Längen von beispielsweise bis zu 8 mm, die sich im ungünstigsten Fall zum Beispiel u-förmig um das erste Strömungsleitelement legen, an einer Brückenbildung zwischen den Wärmetauscherelementen gehindert werden.

Vorzugsweise wird der Überstand in Abhängigkeit von den typischerweise zu erwartenden Spanlängen gewählt. Der Überstand ist dabei größer als die Hälfte der zu erwartenden Spanlänge.

In einem weiteren Ausführungsbeispiel verbindet das erste Strömungsleitelement gegenüberliegende Seiten einer Innenumfangsfläche des Gehäuses. Somit kann auch in seitlichen Randbereichen der Wärmetauscherelemente eine Brückenbildung aus Metallspänen wirksam verhindert werden.

In einer Ausführungsvariante ist das erste Strömungsleitelement plattenförmig ausgebildet.

In einer weiteren Ausführungsvariante ist das erste Strömungsleitelement ein elektrischer Nichtleiter. Folglich kann kein elektrischer Kurzschluss zwischen den Wärmetauscherelementen über das erste Strömungsleitelement erfolgen. Stattdessen müssten die Metallspänen das erste Strömungsleitelement zum Herbeiführen eines elektrischen Kurzschluss "umgehen".

Erfindungsgemäß verjüngt sich das erste Strömungsleitelement entgegen einer Strömungsrichtung des Kraftstoffstroms. Erfindungsgemäß ist das erste Strömungsleitelement an einem stromaufwärtsseitigen Ende des ersten Strömungsleitelements spitz ausgebildet. Damit kann ein Anlegen oder Ablagern von Metallspänen an dem ersten Strömungsleitelement verhindert oder zumindest erschwert werden.

In einer weiteren Ausführungsform weist das Gehäuse einen ersten Teilströmungskanal, in dem das erste Wärmetauscherelement angeordnet ist, und einen zweiten Teilströmungskanal, in dem das zweite Wärmetauscherelement angeordnet ist, auf. Der erste Teilströmungskanal und der zweite Teilströmungskanal sind voneinander getrennt. Die Trennung kann insbesondere durch ein elektrisch nicht-leitfähiges Material vorgesehen sein. Dies hat den Vorteil, dass entlang der gesamten Länge der Wärmetauscherelemente keine Brückenbildung aus Metallspänen zwischen den Wärmetauscherelementen möglich ist.

In einer Weiterbildung bildet das erste Strömungsleitelement einen Bereich eines elektrisch nicht-leitfähigen Rahmens, der das elektrische Heizelement umgibt. Damit kann auf konstruktiv einfache Weise das erste Strömungsleitelement vorgesehen werden und ein elektrischer Kurzschluss auch in Seitenbereichen und an der stromabwärtsseitigen Stirnfläche des elektrischen Heizelements verhindert werden.

In einem Ausführungsbeispiel isoliert der Rahmen die erste Teilströmung und die zweite Teilströmung voneinander.

In einer Weiterbildung weist das Gehäuse einen Strömungskanal auf, der von dem Rahmen in einen ersten Teilströmungskanal, in dem das erste Wärmetauscherelement angeordnet ist, und einen zweiten Teilströmungskanal, in dem das zweite Wärmetauscherelement angeordnet ist, getrennt wird.

In einem Ausführungsbeispiel sind eine stromaufwärtsseitige Stirnfläche des ersten Wärmetauscherelements, eine stromaufwärtsseitige Stirnfläche des zweiten Wärmetauscherelements und eine stromaufwärtsseitige Stirnfläche des elektrischen Heizelements bündig zueinander angeordnet.

Alternativ können beispielsweise eine stromaufwärtsseitige Stirnfläche des elektrischen Heizelements bezüglich einer Strömungsrichtung des Kraftstoffstroms zurückversetzt zu einer stromaufwärtsseitigen Stirnfläche des ersten Wärmetauscherelements und einer stromaufwärtsseitigen Stirnfläche des zweiten Wärmetauscherelements angeordnet sein. Vorzugsweise kann dann das erste Strömungsleitelement zwischen dem ersten Wärmetauscherelement und dem zweiten Wärmetauscherelement angeordnet sein.

Die vorliegende Erfindung kann somit bei unterschiedlichen Anordnungen der Wärmetauscherelemente und des elektrischen Heizelements verwendet werden.

In einem weiteren Ausführungsbeispiel weist die Vorrichtung ein zweites Strömungsleitelement auf, das stromabwärts des elektrischen Heizelements angeordnet und dazu ausgebildet ist, den ersten Teilstrom und den zweiten Teilstrom stromabwärts des ersten Wärmetauscherelements und des zweiten Wärmetauscherelements zusammenzuführen.

Es ist allerdings auch möglich, dass lediglich das erste Strömungsleitelement vorgesehen ist, z. B. wenn die Strömungsrichtung unumkehrbar ist.

Vorzugsweise kann das zweite Strömungsleitelement entsprechend dem ersten Strömungsleitelement ausgebildet sein. Zum Beispiel kann das zweite Strömungsleitelement sich in einer Strömungsrichtung des Kraftstoffstroms vorstehend über das erste Wärmetauscherelement (insbesondere eine stromabwärtsseitige Stirnfläche des ersten Wärmetauscherelements) und das zweite Wärmetauscherelement (insbesondere eine stromabwärtsseitige Stirnfläche des zweiten Wärmetauscherelements,) hinaus erstrecken. Das zweite Strömungsleitelement kann sich ausgehend von einer stromabwärtsseitigen Stirnfläche des elektrischen Heizelements in der Strömungsrichtung des Kraftstoffstroms erstrecken. Das zweite Strömungsleitelement kann eine stromabwärtsseitige Stirnfläche des elektrischen Heizelements entgegen der Strömungsrichtung des Kraftstoffstroms verdecken.

Es ist auch möglich, dass das zweite Strömungsleitelement dazu ausgebildet ist, den ersten Teilstrom und den zweiten Teilstrom so zusammenzuführen, dass ein Anlegen von in dem Kraftstoffstrom geführten, elektrisch leitfähige Festkörperteilchen, insbesondere Metallspänen, an einer stromabwärtsseitigen Stirnfläche des elektrischen Heizelements verhindert wird.

Ähnlich zu dem ersten Strömungsleitelement kann das zweite Strömungsleitelement gegenüberliegende Seiten einer Innenumfangsfläche des Gehäuses verbinden, plattenförmig ausgebildet sein und oder ein elektrischer Nichtleiter sein.

Es besteht ebenfalls die Möglichkeit, dass sich das zweite Strömungsleitelement in einer Strömungsrichtung des Kraftstoffs verjüngt und, insbesondere, an einem stromabwärtsseitigen Ende des Strömungsleitelements abgerundet oder spitz ausgebildet ist.

Vorzugsweise kann das zweite Strömungsleitelement einen Bereich eines elektrisch nicht-leitfähigen Rahmens bilden, der das elektrische Heizelement umgibt.

Gemäß einem weiteren Gesichtspunkt betrifft die Erfindung ein Kraftfahrzeug, insbesondere Nutzfahrzeug (zum Beispiel Lastkraftwagen oder Omnibus), mit einer Vorrichtung wie hierin offenbart.

Die Anwendung der Erfindung ist jedoch nicht auf Kraftfahrzeuge beschränkt. Die Vorrichtung zum Heizen von Kraftstoff wie hierin offenbart kann beispielsweise auch bei stationären Motoren, Schiffsmotoren usw. verwendet werden.

Die hierin verwendeten Begriffe stromaufwärts, stromabwärts, stromaufwärtsseitig und stromabwärtsseitig beziehen sich auf einen Kraftstoffstrom durch die Vorrichtung zum Heizen von Kraftstoff.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schnittansicht durch eine Vorrichtung zum Heizen von Kraftstoff mit einer schematisch dargestellten elektrischen Energiequelle;
- Figur 2: eine weitere Schnittansicht durch die Vorrichtung zum Heizen von Kraftstoff entlang der Linie A-A von Figur 1; und
- Figur 3: eine weitere Schnittansicht durch die Vorrichtung zum Heizen von Kraftstoff entlang der Linie B-B von Figur 1.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

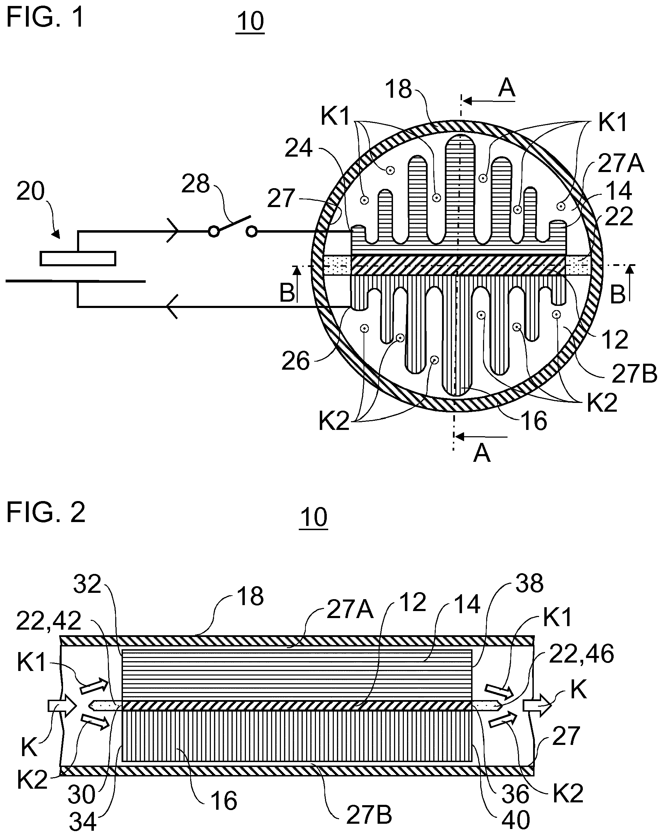

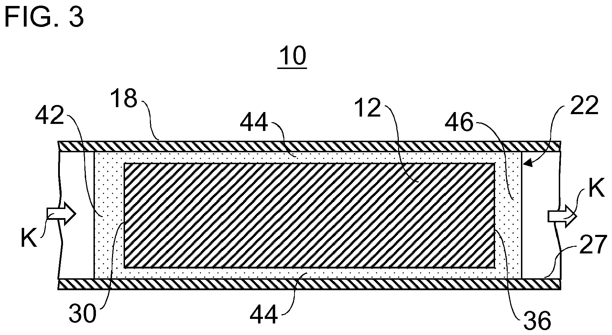

Nachfolgend ist unter Bezugnahme auf die Figuren 1 bis 3 eine beispielhafte Ausführungsform einer Vorrichtung zum Heizen von Kraftstoff beschrieben. Die Vorrichtung zum Heizen von Kraftstoff ist mit den Bezugszeichen 10 bezeichnet. Die Vorrichtung 10 kann insbesondere zum Vorwärmen von Dieselkraftstoff für einen Dieselmotor verwendet werden. Die Vorrichtung 10 kann beispielsweise in einem Kraftfahrzeug, insbesondere einem Nutzfahrzeug, eingesetzt werden.

Die Vorrichtung 10 weist ein elektrisches Heizelement 12, ein erstes Wärmetauscherelement 14, ein zweites Wärmetauscherelement 16, ein Gehäuse 18, eine elektrische Energiequelle 20 und einen Isolatorrahmen 22 auf.

Das elektrische Heizelement 12 ist in dem Gehäuse 18 angeordnet. Im Einzelnen ist das elektrische Heizelement 12 zwischen dem ersten Wärmetauscherelement 14 und dem zweiten Wärmetauscherelement 16 angeordnet. Beispielsweise kann das elektrische Heizelement 12 zwischen dem ersten Wärmetauscherelement 14 dem zweiten Wärmetauscherelement 16 eingeklemmt sein. Das elektrische Heizelement 12 ist plattenförmig ausgebildet. Das elektrische Heizelement 12 erwärmt sich, wenn ein elektrischer Strom durch das elektrische Heizelement 12 fließt. Insbesondere kann das elektrische Heizelement 12 als ein PTC-Heizelement (engl. positive temperature coefficient) ausgeführt sein.

Das erste Wärmetauscherelement 14 ist in dem Gehäuse 18 anliegend an einer Längsfläche des elektrischen Heizelements 12 angeordnet. Das erste Wärmetauscherelement 14 ist thermisch und elektrisch leitend mit dem elektrischen Heizelements 12 verbunden. Das erste Wärmetauscherelement 14 weist Finnen zum Vergrößern einer Oberfläche des ersten Wärmetauscherelements 14 auf. Das erste Wärmetauscherelement 14 weist einen ersten elektrischen Anschluss 24 zum Verbinden mit der elektrischen Energiequelle 20 auf.

Das zweite Wärmetauscherelement 16 ist in dem Gehäuse 18 auf einer dem ersten Wärmetauscherelement 14 gegenüberliegenden Seite des elektrischen Heizelements 12 angeordnet. Das zweite Wärmetauscherelement 16 ist thermisch und elektrisch leitend mit dem elektrischen Heizelement 12 verbunden. Insbesondere liegt das zweite Wärmetauscherelement 16 an einer Längsfläche des elektrischen Heizelements 12 an. Wie das erste Wärmetauscherelement 14, weist auch das zweite Wärmetauscherelement 16 Finnen zum Vergrößern einer Oberfläche für einen vergrößerte Wärmeübertragung auf den Kraftstoff auf. Das zweite Wärmetauscherelement 16 weist einen zweiten elektrischen Anschluss 26 zum Verbinden mit der elektrischen Energiequelle 20 auf.

Im Einzelnen weist das Gehäuse 18 einen Strömungskanal 27 auf, in dem die Wärmeübertragungselemente 14, 16 und die elektrische Heizeinrichtung 12 angeordnet und in Strömungsrichtung des Kraftstoffstroms K ausgerichtet sind.

Im Betrieb wird die Vorrichtung 10 von einem Kraftstoff durchströmt, wie durch die Pfeile K, K1 und K2 in den Figuren angegeben ist. Wird ein Schalter 28 geschlossen, fließt ein elektrischer Strom von der elektrischen Energiequelle 20 zum ersten elektrischen Anschluss 24. Der elektrische Strom durchfließt nacheinander das erste Wärmetauscherelement 14, das elektrische Heizelement 12 und das zweite Wärmetauscherelement 16. Vom zweiten Wärmetauscherelement 16 fließt der elektrische Strom über den zweiten elektrischen Anschluss 26 zurück zur elektrischen Energiequelle 20. Beim Fließen des elektrischen Stroms durch das elektrische Heizelement 12, erwärmt sich dieses stark. Die durch das elektrische Heizelement 12 erzeugte Wärme wird zu den thermisch verbundenen Wärmetauscherelementen 14, 16 übertragen. Der die Vorrichtung 10 durchströmende Kraftstoff umströmt die erwärmten Wärmetauscherelemente 14, 16. Beim Umströmen der Wärmetauscherelemente 14 und 16 wird der Kraftstoff erwärmt.

Um eine elektrische Leitfähigkeit zwischen den Wärmetauscherelementen 14, 16 und dem elektrischen Heizelement 12 zu verbessern, kann das elektrische Heizelement 12 eine elektrisch leitfähige Schicht, zum Beispiel ein aufgedampfte Silberschicht, an Kontaktflächen zu den Wärmetauscherelementen 14, 16 aufweisen.

Wie in Figur 2 dargestellt, ist im gezeigten Ausführungsbeispiel eine stromaufwärtsseitige Stirnfläche 30 des elektrischen Heizelements 12 bündig mit einer stromaufwärtsseitigen Stirnfläche 32 des ersten Wärmetauscherelements 14 und einer stromaufwärtsseitigen Stirnfläche 34 des zweiten Wärmetauscherelements 16 angeordnet. Ebenso ist eine stromabwärtsseitige Stirnfläche 36 des elektrischen Heizelements 12 bündig mit einer stromabwärtsseitigen Stirnfläche 38 des ersten Wärmetauscherelements 14 und einer stromabwärtsseitigen Stirnfläche 40 des zweiten Wärmetauscherelements 16 angeordnet.

Der Isolatorrahmen (elektrisch nicht-leitfähiger Rahmen) 22 umgibt das elektrische Heizelement 12. Der Isolatorrahmen 22 verhindert, dass bspw. längliche Metallspäne, die einen stromaufwärts der Vorrichtung 10 angeordneten Filter passiert haben, einen elektrischen Kurzschluss in der Vorrichtung 10 erzeugen können.

Im Einzelnen weist der Isolatorrahmen 22 ein stromaufwärtsseitiges Strömungsleitelement 42, zwei seitliche Strömungsleitelemente 44 und ein stromabwärtsseitiges Strömungsleitelement 46 auf. Die Strömungsleitelemente 42, 44 und 46 sind integral miteinander zum Bilden des Isolatorrahmens 22 ausgebildet.

Das stromaufwärtsseitige Strömungsleitelement 42 ist stromaufwärts des elektrischen Heizelements 12 angeordnet und liegt an der stromaufwärtsseitigen Stirnfläche 30 des elektrischen Heizelements 12 an. Das stromaufwärtsseitige Strömungsleitelement 42 steht über die stromaufwärtsseitigen Stirnflächen 32, 34 der Wärmetauscherelemente 14 und 16 entgegen der Strömungsrichtung des Kraftstoffstroms K vor. Das stromaufwärtsseitige Strömungsleitelement 42 erstreckt sich über eine gesamte Breite des Strömungskanals 27.

Die seitlichen Strömungsleitelemente 44 erstrecken sich zwischen seitlichen Längsflächen des elektrischen Heizelements 12 und der Innenumfangswand des Strömungskanals 27. Die seitlichen Strömungsleitelemente 44 erstrecken sich entlang einer gesamten Länge des elektrischen Heizelements 12. Die seitlichen Strömungsleitelemente 44 verbinden das stromaufwärtsseitige Strömungsleitelement 42 mit dem stromabwärtsseitigen Strömungsleitelement 46.

Das stromabwärtsseitige Strömungsleitelement 46 ist stromabwärts des elektrischen Heizelements 12 angeordnet und liegt an der stromabwärtsseitigen Stirnfläche 36 des elektrischen Heizelements 12 an. Das stromaufwärtsseitige Strömungsleitelement 46 steht über die stromaufwärtsseitigen Stirnflächen 32, 34 der Wärmetauscherelemente 14 und 16 in Strömungsrichtung des Kraftstoffstroms K vor. Das stromabwärtsseitige Strömungsleitelement 46 erstreckt sich über eine gesamte Breite des Strömungskanals 27.

Der Isolatorrahmen 22 hat die Aufgabe, den in das Gehäuse 18 einströmenden Kraftstoffstrom K in zwei Teilströme K1 und K2 aufzuteilen und die Teilströme K1 und K2 während des Umströmens der Wärmetauscherelemente 14, 16 voneinander zu trennen. Mit anderen Worten gesagt, der Isolatorrahmen 22 trennt den Strömungskanal 27 konstruktiv in einen ersten Teilströmungskanal 27A, in dem das erste Wärmetauscherelement 14 angeordnet ist, und einen zweiten Teilströmungskanal 27B, in dem das zweite Wärmetauscherelement 16 angeordnet ist.

Im Einzelnen teilt das stromaufwärtsseitige Strömungsleitelement 42 den Kraftstoffstrom K in den ersten Teilstrom K1, der das erste Wärmetauscherelement 14 umspült, und den zweiten Teilstrom K2, der das zweite Wärmetauscherelement 16 umspült. Durch die Aufteilung in die Teilströme K1 und K2 an einer Stelle stromaufwärts des elektrischen Heizelements 12 und der Wärmetauscherelemente 14, 16 kann verhindert werden, dass der Kraftstoffstrom K einen Bereich um die stromaufwärtsseitige Stirnfläche 30 des elektrischen Heizelements 12 umspült. Dadurch können sich dort keine (länglichen) Metallspäne ablagern, die zu einem elektrischen Kurzschluss führen können. Insbesondere wird eine Brückenbildung aus einem oder mehreren Metallspänen zwischen der stromaufwärtsseitigen Stirnfläche 32 des ersten Wärmetauscherelements 14 und der stromaufwärtsseitigen Stirnfläche 34 des zweiten Wärmetauscherelements 16 entlang der stromaufwärtsseitigen Stirnfläche 30 des elektrischen Heizelements 12 verhindert. Damit kann ein elektrischer Kurzschluss zwischen dem mit einem negativen Anschlusspunkt der elektrischen Energiequelle 20 verbundenen ersten Wärmetauscherelement 14 und dem mit einem positiven Anschlusspunkt der elektrischen Energiequelle 20 verbundenen zweiten Wärmetauscherelement 16 unter Umgehung des elektrischen Heizelements 12 verhindert werden.

Um ein Anlegen (Ablagern) von Metallspänen an dem stromaufwärtsseitigen Strömungsleitelement 42 zu verhindern oder zumindest zu erschweren, kann sich das stromaufwärtsseitige Strömungsleitelement 42 entgegen des Strömungsrichtung verjüngen und insbesondere ein spitzes oder abgerundetes Ende aufweisen. In der gezeigten Ausführungsform ist die stromaufwärtsseitige Stirnfläche 30 des elektrischen Heizelements 12 durch das stromaufwärtsseitige Strömungsleitelement 42 verdeckt.

Die seitlichen Strömungsleitelemente 44 verhindern eine Brückenbildung aus Metallspänen zwischen den Längsseitenflächen der Wärmetauscherelemente 14 und 16. Das stromabwärtsseitige Strömungselement 46 verhindert eine Brückenbildung aus Metallspänen zwischen den stromabwärtsseitigen Stirnflächen 38, 40 der Wärmetauscherelemente 14 und 16. Das stromabwärtsseitige Strömungsleitelement 46 kann sich in einer Strömungsrichtung verjüngen, um ein Anlegen (Ablagern) von Metallspäne zu verhindern

In anderen Ausführungsformen kann beispielsweise nur das stromaufwärtsseitige Strömungsleitelement 42 anstelle des gesamten Isolatorrahmens 22 vorgesehen sein, da im Bereich der stromaufwärtsseitigen Stirnflächen 30, 32, 34 das Risiko eines elektrischen Kurzschlusses durch Brückenbildung besonders hoch ist.

Die Erfindung ist nicht auf die vorstehend beschriebenen bevorzugten Ausführungsbeispiele beschränkt. Vielmehr ist eine Vielzahl von Varianten und Abwandlungen möglich.

### Bezugszeichenliste

- 10: Vorrichtung zum Heizen von Kraftstoff
- 12: Elektrisches Heizelement
- 14: Erstes Wärmetauscherelement
- 16: Zweites Wärmetauscherelement
- 18: Gehäuse
- 20: Elektrische Energiequelle
- 22: Isolatorrahmen (elektrisch nicht-leitfähiger Rahmen)
- 24: Erster elektrischer Anschluss
- 26: Zweiter elektrischer Anschluss
- 27: Strömungskanal
- 27A: Erster Teilströmungskanal
- 27B: Zweiter Teilströmungskanal
- 28: Schalter
- 30: Stromaufwärtsseitige Stirnfläche
- 32: Stromaufwärtsseitige Stirnfläche
- 34: Stromaufwärtsseitige Stirnfläche
- 36: Stromabwärtsseitige Stirnfläche
- 38: Stromabwärtsseitige Stirnfläche
- 40: Stromabwärtsseitige Stirnfläche
- 42: Stromaufwärtsseitiges (erstes) Strömungsleitelement
- 44: Seitliches Strömungsleitelement
- 46: Stromabwärtsseitiges (zweites) Strömungsleitelement

## Patentansprüche

1. Vorrichtung (10) zum Heizen von Kraftstoff, insbesondere Dieselkraftstoff, aufweisend:
ein rohrförmiges Gehäuse (18) zum Führen eines Kraftstoffstroms (K);
ein erstes Wärmetauscherelement (14), das in dem Gehäuse (18) angeordnet ist;
ein zweites Wärmetauscherelement (16), das in dem Gehäuse (18) angeordnet ist;
ein elektrisches Heizelement (12), insbesondere ein PTC-Heizelement, das in dem Gehäuse (18) zwischen dem ersten Wärmetauscherelement (14) und dem zweiten Wärmetauscherelement (16) angeordnet ist, wobei das erste Wärmetauscherelement (14), das elektrische Heizelement (12) und das zweite Wärmetauscherelement (16) elektrisch leitend und thermisch verbunden sind, wobei der elektrische Strom nacheinander das erste Wärmetauscherelement (14), das elektrische Heizelement (12) und das zweite Wärmetauscherelement (16) durchfließt;
ein erstes Strömungsleitelement (42), das dazu ausgebildet ist, den Kraftstoffstrom (K) stromaufwärts des ersten Wärmetauscherelements (14) und des zweiten Wärmetauscherelements (16) in einen ersten Teilstrom (K1), der das erste Wärmetauscherelement (14) umströmt, und einen zweiten Teilstrom (K2), der das zweite Wärmetauscherelement (16) umströmt, aufzuteilen,
wobei das erste Strömungsleitelement (42) sich entgegen einer Strömungsrichtung des Kraftstoffstroms (K) verjüngt,
**dadurch gekennzeichnet,**
**dass** das erste Strömungsleitelement (42) an einem stromaufwärtsseitigen Ende des ersten Strömungsleitelements (42) spitz ausgebildet ist.

2. Vorrichtung (10) nach Anspruch 1, wobei das erste Strömungsleitelement (42) dazu ausgebildet ist, den Kraftstoffstrom (K) so in den ersten Teilstrom (K1) und den zweiten Teilstrom (K2) aufzuteilen, dass ein Anlegen oder Ablagern von in dem Kraftstoffstrom (K) geführten, elektrisch leitfähigen Festkörperteilchen, insbesondere Metallspänen, an einer stromaufwärtsseitigen Stirnfläche (30; 32; 34) des elektrischen Heizelements (12), des ersten Wärmetauscherelements (14) und/oder des zweiten Wärmetauscherelements (16) verhindert wird.

3. Vorrichtung (10) nach Anspruch 1 oder Anspruch 2, wobei:
das erste Strömungsleitelement (42) sich ausgehend von einer stromaufwärtsseitigen Stirnfläche (30) des elektrischen Heizelements (12) erstreckt; und/oder
das erste Strömungsleitelement (42) eine stromaufwärtsseitige Stirnfläche (30) des elektrischen Heizelements (12) in einer Strömungsrichtung des Kraftstoffstroms (K) verdeckt.

4. Vorrichtung (10) nach einem der vorherigen Ansprüche, wobei das erste Strömungsleitelement (42) sich entgegen einer Strömungsrichtung des Kraftstoffstroms (K) vorstehend über das erste Wärmetauscherelement (14) und das zweite Wärmetauscherelement (16) hinaus erstreckt.

5. Vorrichtung (10) nach Anspruch 4, wobei das erste Strömungsleitelement (42) mindestens 4 mm, vorzugsweise mindestens 5 mm, über das erste Wärmetauscherelement (14) und das zweite Wärmetauscherelement (16) entgegen der Strömungsrichtung des Kraftstoffstroms (K) vorsteht.

6. Vorrichtung (10) nach einem der vorherigen Ansprüche, wobei das erste Strömungsleitelement (42) gegenüberliegende Seiten einer Innenumfangsfläche des Gehäuses (18) verbindet.

7. Vorrichtung (10) nach einem der vorherigen Ansprüche, wobei das erste Strömungsleitelement (42) plattenförmig ausgebildet ist.

8. Vorrichtung (10) nach einem der vorherigen Ansprüche, wobei das erste Strömungsleitelement (42) ein elektrischer Nichtleiter ist.

9. Vorrichtung (10) nach einem der vorherigen Ansprüche, wobei das Gehäuse (18) einen ersten Teilströmungskanal (27A), in dem das erste Wärmetauscherelement (14) angeordnet ist, und einen zweiten Teilströmungskanal (27B), in dem das zweite Wärmetauscherelement (16) angeordnet ist, aufweist und der erste Teilströmungskanal (27A) und der zweite Teilströmungskanal (27B) voneinander getrennt sind.

10. Vorrichtung (10) nach einem der vorherigen Ansprüche, wobei das erste Strömungsleitelement (42) einen Bereich eines elektrisch nicht-leitfähigen Rahmens (22) bildet, der das elektrische Heizelement (12) umgibt.

11. Vorrichtung (10) nach Anspruch 10, wobei:
der Rahmen (22) die erste Teilströmung (K1) und die zweite Teilströmung (K2) voneinander isoliert; und/oder
das Gehäuse (18) einen Strömungskanal (27) aufweist, der von dem Rahmen (22) in einen ersten Teilströmungskanal (27A), in dem das erste Wärmetauscherelement (14) angeordnet ist, und einen zweiten Teilströmungskanal (27B), in dem das zweite Wärmetauscherelement (16) angeordnet ist, getrennt wird.

12. Vorrichtung (10) nach einem der vorherigen Ansprüche, wobei:
eine stromaufwärtsseitige Stirnfläche (32) des ersten Wärmetauscherelements (14), eine stromaufwärtsseitige Stirnfläche (34) des zweiten Wärmetauscherelements (16) und eine stromaufwärtsseitige Stirnfläche (30) des elektrischen Heizelements (12) bündig zueinander angeordnet sind; oder
eine stromaufwärtsseitige Stirnfläche (30) des elektrischen Heizelements (12) bezüglich einer Strömungsrichtung des Kraftstoffstroms (K) zurückversetzt zu einer stromaufwärtsseitigen Stirnfläche (32) des ersten Wärmetauscherelements (14) und einer stromaufwärtsseitigen Stirnfläche (34) des zweiten Wärmetauscherelements (16) angeordnet ist, und, vorzugsweise, das erste Strömungsleitelement (42) zwischen dem ersten Wärmetauscherelement (14) und dem zweiten Wärmetauscherelement (16) angeordnet ist.

13. Vorrichtung (10) nach einem der vorherigen Ansprüche, ferner aufweisend:
ein zweites Strömungsleitelement (46), das stromabwärts des elektrischen Heizelements (12) angeordnet und dazu ausgebildet ist, den ersten Teilstrom (K1) und den zweiten Teilstrom (K2) zusammenzuführen, wobei, vorzugsweise, das zweite Strömungsleitelement (46):
sich in einer Strömungsrichtung des Kraftstoffstroms (K) vorstehend über das erste Wärmetauscherelement (14) und das zweite Wärmetauscherelement (16) hinaus erstreckt; und/oder
sich ausgehend von einer stromabwärtsseitigen Stirnfläche (36) des elektrischen Heizelements (12) in der Strömungsrichtung des Kraftstoffstroms (K) erstreckt; und/oder
eine stromabwärtsseitige Stirnfläche (36) des elektrischen Heizelements (12) entgegen der Strömungsrichtung des Kraftstoffstroms (K) verdeckt.

14. Kraftfahrzeug, insbesondere Nutzfahrzeug, mit einer Vorrichtung (10) nach einem der vorherigen Ansprüche.

## Claims

1. Device (10) for heating fuel, in particular diesel fuel, having:
a tubular housing (18) for guiding a fuel flow (K);
a first heat exchange element (14) which is arranged in the housing (18);
a second heat exchange element (16) which is arranged in the housing (18);
an electrical heating element (12), in particular a PTC heating element, which is arranged in the housing (18) between the first heat exchange element (14) and the second heat exchange element (16), wherein the first heat exchange element (14), the electrical heating element (12) and the second heat exchange element (16) are electrically conductive and thermally connected, wherein the electrical current flows through the first heat exchange element (14), the electrical heating element (12) and the second heat exchange element (16) one after the other;
a first flow directing element (42) which is constructed to divide the fuel flow (K) upstream of the first heat exchange element (14) and the second heat exchange element (16) into a first part-flow (K1), which flows around the first heat exchange element (14), and a second part-flow (K2), which flows around the second heat exchange element (16), wherein the first flow directing element (42) tapers counter to a flow direction of the fuel flow (K),
**characterized in that** the first flow directing element (42), at an upstream-side end of the first flow directing element (42), is constructed in a pointed manner.

2. Device (10) according to Claim 1, wherein the first flow directing element (42) is constructed to divide the fuel flow (K) into the first part-flow (K1) and the second part-flow (K2) in such a manner that an application or depositing of electrically conductive solid particles, in particular metal chips, which are carried in the fuel flow (K) on an upstream-side end face (30; 32; 34) of the electrical heating element (12), the first heat exchange element (14) and/or the second heat exchange element (16) is prevented.

3. Device (10) according to Claim 1 or Claim 2, wherein:
the first flow directing element (42) extends from an upstream-side end face (30) of the electrical heating element (12); and/or
the first flow directing element (42) covers an upstream-side end face (30) of the electrical heating element (12) in a flow direction of the fuel flow (K).

4. Device (10) according to any one of the preceding claims, wherein the first flow directing element (42) extends so as to protrude counter to a flow direction of the fuel flow (K) beyond the first heat exchange element (14) and the second heat exchange element (16).

5. Device (10) according to Claim 4, wherein the first flow directing element (42) protrudes by at least 4 mm, preferably at least 5 mm, beyond the first heat exchange element (14) and the second heat exchange element (16) counter to the flow direction of the fuel flow (K).

6. Device (10) according to any one of the preceding claims, wherein the first flow directing element (42) connects opposing sides of an inner peripheral face of the housing (18) .

7. Device (10) according to any one of the preceding claims, wherein the first flow directing element (42) is constructed in a plate-like manner.

8. Device (10) according to any one of the preceding claims, wherein the first flow directing element (42) is an electrical non-conductor.

9. Device (10) according to any one of the preceding claims, wherein the housing (18) has a first part-flow channel (27A), in which the first heat exchange element (14) is arranged, and a second part-flow channel (27B), in which the second heat exchange element (16) is arranged, and the first part-flow channel (27A) and the second part-flow channel (27B) are separated from each other.

10. Device (10) according to any one of the preceding claims, wherein the first flow directing element (42) forms a region of an electrically non-conductive frame (22) which surrounds the electrical heating element (12).

11. Device (10) according to Claim 10, wherein:
the frame (22) insulates the first part-flow (K1) and the second part-flow (K2) from each other; and/or
the housing (18) has a flow channel (27) which is separated by the frame (22) into a first part-flow channel (27A), in which the first heat exchange element (14) is arranged, and a second part-flow channel (27B), in which the second heat exchange element (16) is arranged.

12. Device (10) according to any one of the preceding claims, wherein:
an upstream-side end face (32) of the first heat exchange element (14), an upstream-side end face (34) of the second heat exchange element (16) and an upstream-side end face (30) of the electrical heating element (12) are arranged flush with each other; or
an upstream-side end face (30) of the electrical heating element (12) with respect to a flow direction of the fuel flow (K) is arranged to be recessed backwards with respect to an upstream-side end face (32) of the first heat exchange element (14) and an upstream-side end face (34) of the second heat exchange element (16), and preferably the first flow directing element (42) is arranged between the first heat exchange element (14) and the second heat exchange element (16).

13. Device (10) according to any one of the preceding claims, further having:
a second flow directing element (46) which is arranged downstream of the electrical heating element (12) and which is constructed to merge the first part-flow (K1) und the second part-flow (K2), wherein preferably the second flow directing element (46):
extends in a flow direction of the fuel flow (K) so as to protrude beyond the first heat exchange element (14) and the second heat exchange element (16); and/or
extends from a downstream-side end face (36) of the electrical heating element (12) in the flow direction of the fuel flow (K); and/or
covers a downstream-side end face (36) of the electrical heating element (12) counter to the flow direction of the fuel flow (K).

14. Motor vehicle, in particular utility vehicle, having a device (10) according to any one of the preceding claims.

## Revendications

1. Dispositif (10) pour chauffer du carburant, notamment du carburant diesel, comprenant :
un boîtier (18) de forme tubulaire destiné à guider un flux de carburant (K) ;
un premier élément échangeur de chaleur (14) qui est disposé dans le boîtier (18) ;
un deuxième élément échangeur de chaleur (16) qui est disposé dans le boîtier (18) ;
un élément chauffant électrique (12), notamment un élément chauffant à CTP, qui est disposé dans le boîtier (18) entre le premier élément échangeur de chaleur (14) et le deuxième élément échangeur de chaleur (16), le premier élément échangeur de chaleur (14), l'élément chauffant électrique (12) et le deuxième élément échangeur de chaleur (16) étant reliés de manière électriquement conductrice et thermiquement, le courant électrique passant successivement à travers le premier élément échangeur de chaleur (14), l'élément chauffant électrique (12) et le deuxième élément échangeur de chaleur (16) ;
un premier élément de conduite d'écoulement (42) qui est configuré pour diviser le flux de carburant (K) en amont du premier élément échangeur de chaleur (14) et du deuxième élément échangeur de chaleur (16) en un premier flux partiel (K1), lequel s'écoule autour du premier élément échangeur de chaleur (14), et un deuxième flux partiel (K2), lequel s'écoule autour du deuxième élément échangeur de chaleur (16) ;
le premier élément de conduite d'écoulement (42) se rétrécissant en sens inverse d'une direction d'écoulement du flux de carburant (K),
**caractérisé en ce**
**que** le premier élément de conduite d'écoulement (42) est configuré pointu au niveau d'une extrémité côté amont du premier élément de conduite d'écoulement (42).

2. Dispositif (10) selon la revendication 1, le premier élément de conduite d'écoulement (42) étant configuré pour diviser le flux de carburant (K) en le premier flux partiel (K1) et le deuxième flux partiel (K2) de telle sorte qu'une application ou un dépôt de particules solides électriquement conductrices emportées dans le flux de carburant (K), notamment de copeaux métalliques, au niveau d'une face frontale (30 ; 32 ; 34) côté amont de l'élément chauffant électrique (12), du premier élément échangeur de chaleur (14) et/ou du deuxième élément échangeur de chaleur (16) est empêché.

3. Dispositif (10) selon la revendication 1 ou 2, dans lequel :
le premier élément de conduite d'écoulement (42) s'étend à partir d'une face frontale (30) côté amont de l'élément chauffant électrique (12) ; et/ou
le premier élément de conduite d'écoulement (42) recouvre une face frontale (30) côté amont de l'élément chauffant électrique (12) dans une direction d'écoulement du flux de carburant (K).

4. Dispositif (10) selon l'une des revendications précédentes, le premier élément de conduite d'écoulement (42) s'étendant en sens inverse d'une direction d'écoulement du flux de carburant (K) en faisant saillie au-dessus du premier élément échangeur de chaleur (14) et du deuxième élément échangeur de chaleur (16).

5. Dispositif (10) selon la revendication 4, le premier élément de conduite d'écoulement (42) faisant saillie d'au moins 4 mm, de préférence d'au moins 5 mm au-dessus du premier élément échangeur de chaleur (14) et du deuxième élément échangeur de chaleur (16) en sens inverse de la direction d'écoulement du flux de carburant (K) .

6. Dispositif (10) selon l'une des revendications précédentes, le premier élément de conduite d'écoulement (42) reliant les côtés opposés d'une surface périphérique interne du boîtier (18).

7. Dispositif (10) selon l'une des revendications précédentes, le premier élément de conduite d'écoulement (42) étant réalisé en forme de plaque.

8. Dispositif (10) selon l'une des revendications précédentes, le premier élément de conduite d'écoulement (42) étant non conducteur d'électricité.

9. Dispositif (10) selon l'une des revendications précédentes, le boîtier (18) possédant un premier canal d'écoulement partiel (27A), dans lequel est disposé le premier élément échangeur de chaleur (14), et un deuxième canal d'écoulement partiel (27B), dans lequel est disposé le deuxième élément échangeur de chaleur (16), et le premier canal d'écoulement partiel (27A) et le deuxième canal d'écoulement partiel (27B) étant séparés l'un de l'autre.

10. Dispositif (10) selon l'une des revendications précédentes, le premier élément de conduite d'écoulement (42) formant une zone d'un cadre non conducteur d'électricité (22) qui entoure l'élément chauffant électrique (12).

11. Dispositif (10) selon la revendication 10, dans lequel :
le cadre (22) isole le premier flux partiel (K1) et le deuxième flux partiel (K2) l'un de l'autre ; et/ou le boîtier (18) possède un canal d'écoulement (27) qui est séparé par le cadre (22) en un premier canal d'écoulement partiel (27A), dans lequel est disposé le premier élément échangeur de chaleur (14), et un deuxième canal d'écoulement partiel (27B), dans lequel est disposé le deuxième élément échangeur de chaleur (16).

12. Dispositif (10) selon l'une des revendications précédentes, dans lequel :
une face frontale côté amont (32) du premier élément échangeur de chaleur (14), une face frontale côté amont (34) du deuxième élément échangeur de chaleur (16) et une face frontale côté amont (30) de l'élément chauffant électrique (12) sont disposées à fleur les unes par rapport aux autres ; ou
une face frontale côté amont (30) de l'élément chauffant électrique (12) est disposée en retrait par rapport à un sens d'écoulement du flux de carburant (K) par rapport à une face frontale côté amont (32) du premier élément échangeur de chaleur (14) et à une face frontale côté amont (34) du deuxième élément échangeur de chaleur (16) et, de préférence, le premier élément de conduite d'écoulement (42) est disposé entre le premier élément échangeur de chaleur (14) et le deuxième élément échangeur de chaleur (16).

13. Dispositif (10) selon l'une des revendications précédentes, comprenant en outre :
un deuxième élément de conduite d'écoulement (46) qui est disposé en aval de l'élément chauffant électrique (12) et configuré pour réunir le premier flux partiel (K1) et le deuxième flux partiel (K2), le deuxième élément de conduite d'écoulement (46), de préférence :
s'étendant dans une direction d'écoulement du flux de carburant (K) en faisant saillie au-dessus du premier élément échangeur de chaleur (14) et du deuxième élément échangeur de chaleur (16) ; et/ou
s'étendant à partir d'une face frontale côté aval (36) de l'élément chauffant électrique (12) dans la direction d'écoulement du flux de carburant (K) ; et/ou recouvrant une face frontale côté aval (36) de l'élément chauffant électrique (12) en sens inverse de la direction d'écoulement du flux de carburant (K).

14. Véhicule automobile, notamment véhicule utilitaire, comprenant un dispositif (10) selon l'une des revendications précédentes.
